# EUROPEAN PATENT APPLICATION

(11) **EP 4 510 259 A1**
(43) Date of publication of application: **19.02.2025**
(21) Application number: 23191826.9
(22) Date of filing: 17.08.2023
(51) Int. Cl.: H01M 10/04

(54) **BATTERY MANUFACTURING SYSTEM AND METHOD**

(71) Applicant: LG ENERGY SOLUTION, LTD., Seoul 07335 (KR)
(72) Inventor: HWANG, Jeong Woo, Daejeon 34122 (KR); LEE, Jong Chan, Daejeon 34122 (KR)
(74) Representative: Goddar, Heinz J.

(57) **Abstract**

Disclosed is an automated battery manufacturing system. The system comprises a detection unit, a removal unit and a transport unit. The detection unit detects a reject mark on a battery product. The removal unit removes the battery product. The transport unit transports the battery product to the detection unit and to transport the battery product to the removal unit in response to the detection unit detecting the reject mark on the battery product.

## Description

### TECHNICAL FIELD

The invention relates to the manufacturing of a battery, particularly a secondary battery. Specifically, the invention relates to a battery manufacturing system and a machine-readable medium storing instructions to carry out a battery manufacturing method. The term "battery manufacturing" herein explicitly encompasses manufacturing of a secondary battery.

The invention also relates to an automated plant, particularly a smart factory in which the battery manufacturing system and/or the mattery manufacturing method as disclosed herein is implemented and/or carried out.

Battery technology has been advancing rapidly in recent years. There have been significant improvements in battery energy density. Enhanced charging capabilities and faster charging times are also being achieved, making battery-using electric devices more practical and convenient for everyday use. As battery technology improves and economies of scale are realized through increased production, the cost of manufacturing batteries is decreasing.

This development particularly allows electric vehicles (EVs) to travel longer distances on a single charge. The increasing importance of batteries for EVs is driven by their positive environmental impact, potential for energy independence, technological advancements, cost reduction, support for renewable energy integration, grid resilience, and alignment with sustainable development objectives.

In view of the developments of the prior art, it is desired to further increase the efficiency, and to reduce the costs, of the manufacturing of a battery, particularly a secondary battery.

### SUMMARY OF THE INVENTION

The technical problems known from the prior art are solved by the subject matter as defined by the features of the independent claims. Particular embodiments of the invention are given by the features of the dependent claims. In the following, embodiments of the invention are introduced and their features are described in detail. Any, some or all of the embodiments can be combined with one another unless indicated otherwise or technically inappropriate.

According to an embodiment, an automated battery manufacturing system is disclosed. The automated battery manufacturing system comprises a detection unit, a transport unit and a removal unit. The detection unit is configured to detect a reject mark on a battery product. The removal unit is configured to remove the battery product. The transport unit is configured to transport the battery product to the detection unit. The transport unit is further configured to transport the battery product to the removal unit in response to (or if) the detection unit detecting (detects) a reject mark on the battery product.

Consequently, the automated battery manufacturing system is configured so that a battery product is transported by the transport unit to the detection unit. The detection unit is configured to search for a reject mark on the battery product. If the detection unit detects a reject mark on the battery product, the battery product is transported to the removal unit, which removes the battery product. In this manner, a battery product that carries a reject mark can be removed from the system in an automated manner, thereby increasing the efficiency and decreasing time, cost and energy requirements.

According to a further embodiment, an automated plant is disclosed. The automated plant comprises the automated battery manufacturing system as disclosed herein. The examples and optional features of the automated manufacturing system as disclosed herein may also apply to the automated plant.

The automated plant may be or include a smart factory, in which the automated battery manufacturing system as disclosed herein is implemented. The examples and optional features of the automated manufacturing system as disclosed herein may also apply to the smart factory. The term "smart factory" is used herein as commonly understood in the field of industrial processing, particularly in the fields of automation, Internet of Things, artificial intelligence, big data analytics, cloud computing and robotics. In particular, the smart factory may be understood in connection with the Industry 4.0 paradigm. The smart factory as used herein may also be referred to as a digital factory or intelligent factory, and may indicate an advanced manufacturing facility that utilizes various digital technologies, automation, and data exchange in production processes.

According to a further embodiment, an automated battery manufacturing method is disclosed. The automated battery manufacturing method, also shortly referred to herein as a "battery manufacturing method" or "method", may comprise the following method steps: transporting a battery product to a detection unit; by the detection unit, searching for a reject mark on the battery product; if a reject mark is found on the battery product, recognizing that the battery product is a nonconforming battery product, and forwarding the nonconforming battery product to a removal unit; and ("else") if no reject mark is found on the battery product, recognizing that the battery product is an approved battery product, and forwarding the approved battery product to a packaging unit.

Consequently, an automated battery manufacturing method is provided which enables an automatic sorting of battery products into good ones ("approved battery products", see below) and no-good ones ("nonconforming battery products", see below). Hence, a method may be provided that facilitates an integration of a battery manufacturing process into an automated plant, such as a smart factory. Furthermore, the system and the method disclosed herein may facilitate automation of battery manufacturing, thereby reducing cost, time and energy required.

The automated battery manufacturing system may be capable of carrying out the automated battery manufacturing method as disclosed herein. Furthermore, the automated battery manufacturing system may be capable of carrying out any, some or all of the examples and features of the automated battery manufacturing method disclosed herein. The automated battery manufacturing method may be implemented to be carried out in the automated battery manufacturing system as disclosed herein.

The automated battery manufacturing method may include any, some or all of the examples and features of the automated battery manufacturing system unless indicated otherwise or technically inappropriate. Thus, the components mentioned in the automated battery manufacturing method may correspond to the respective ones of the automated battery manufacturing system regardless of the use of indefinite articles "a" or "an". Where a component of the automated battery manufacturing system is "configured to" perform a task, this may be interpreted as a step of the automated battery manufacturing method of performing the same task. The automated battery manufacturing system may include any, some or all of the examples and features of the automated battery manufacturing method unless indicated otherwise or technically inappropriate.

According to a further embodiment, a machine-readable medium is disclosed. The machine-readable medium stores instructions that, when executed by a processor, cause the processor to perform a battery manufacturing method. The battery manufacturing method comprises the following steps: transporting a battery product to a detection unit; by the detection unit, searching for a reject mark on the battery product; if a reject mark is found on the battery product, recognizing that the battery product is a nonconforming battery product, and forwarding the nonconforming battery product to a removal unit; and if no reject mark is found on the battery product, recognizing that the battery product is an approved battery product, and forwarding the approved battery product to a packaging unit.

Thus, the machine-readable medium may store instructions for carrying out the automated battery manufacturing method as disclosed herein. As such, the instructions stored in (on or by) the machine-readable medium may further include any, some or all of the examples and features of the automated battery manufacturing method and/or the automated battery manufacturing system disclosed herein, unless indicated otherwise or technically inappropriate.

Herein, the automated battery manufacturing system may refer to a set of devices involved in a process of battery manufacturing. The battery manufacturing system may encompass all the stages from raw material preparation to the assembly of battery cells and modules, quality control, testing, and packaging. The automated battery manufacturing system may further include any one, some or each of the additional features as disclosed below, unless explicitly indicated otherwise or technically inappropriate. The automated battery manufacturing system may be capable of carrying out or implementing the battery manufacturing method provided in a machine-readable storage as disclosed herein.

Herein, the expressions "automated" as in automated battery manufacturing system and automated battery manufacturing method and "automatically" are used herein as commonly understood in the field of industrial processing, particularly in connection with automation, Internet of Things, artificial intelligence, big data analytics, cloud computing and robotics. The expression "automated" may indicate that the battery manufacturing system operates with reduced, minimal or no human intervention. Particularly, the expression "automated" as in automated battery manufacturing system or "automatically" used herein may refer to automation as commonly understood in the field of industrial processing. The automated battery manufacturing system may operate according to pre-programmed instructions and/or algorithms to perform tasks, particularly mechanical processes, and/or make decisions. The automated battery manufacturing system may be capable of carrying out repetitive or complex actions without constant human control. Optionally, the automated battery manufacturing system may comprise a human-machine interface to allow human intervention into operation of the automated battery manufacturing system. The automated battery manufacturing system may involve the use of any, some or all of the following: one or more processors, one or more control units and/or one or more memories. The automated battery manufacturing system may involve the use of further devices in addition to the components disclosed herein, to carry out battery manufacturing processes. Hereinafter, a shortened term "system" may be used to indicate the automated battery manufacturing system disclosed herein, unless indicated otherwise.

Herein, the term battery may be used in accordance with the teachings of electrochemical energy storage. The battery may encompass a primary battery and a secondary battery. In some examples, the battery may explicitly refer to a secondary battery that is rechargeable. Herein, a battery product may indicate an industrial product including a container that stores chemical energy and converts it into electrical energy. The battery product may comprise at least one electrochemical cell having a positive electrode, a negative electrode, a separator therebetween and an electrolyte. The battery product may be or include a secondary battery or a part thereof. In some examples, the battery product may refer to a completed product including a battery, or a part of a battery. Alternatively, the battery product may refer to a semi-product including a battery, or a part of a battery, during a manufacturing process. Without loss of generality, the battery product as used herein may refer to a pouch-type battery cell, a prismatic battery cell or a cylindrical battery cell.

Herein, reference is made to "a" battery product to generally indicate one or more battery products for the sake of conciseness. As discussed further below, the battery product as referred to herein may be one of a plurality of battery products. The system and method as described herein may be configured to operate and carried out, respectively, in an industrialized production process. Hence, the reference herein to the general singular term "a battery product" may encompass processing (including e.g., transporting, scanning for a reject mark, removing, moving, arranging, packaging, unpacking, etc.) one single battery product, multiple battery products in a sequence (i.e., one battery product at a time). Furthermore, in specific cases, the general singular term "a battery product" may encompass processing multiple battery products as a set of battery products at a time (i.e., in groups). A battery product, as generally referred to, may be a nonconforming battery product carrying a reject mark thereon, or an approved battery product that lacks a reject mark.

Any, some or each of the above specifications and features with regard to a battery product may accordingly apply to the nonconforming battery product and/or the approved battery product as disclosed herein, unless indicated otherwise or technically inappropriate.

Herein, a nonconforming battery product may indicate a battery product that is (to be) excluded from further distribution, particularly to a supply chain and/or a customer. For example, a nonconforming battery product may indicate a battery product that does not meet prefefined requirements and/or quality standards. For example, a nonconforming battery product may indicate a failure battery product, a defective battery product, a no-good battery product, a faulty battery product, a subpar battery product and/or a substandard battery product. A nonconforming battery product may be a result of a manufacturing failure, a damage occurred during the manufacturing and/or a faulty component used in the manufacturing.

Herein, an approved battery product may indicate a battery product that meets predefined requirements and/or quality standards. An approved battery product may indicate a battery product that is designated for packaging, storage and/or distribution, particularly to a supply chain and/or a customer. For example, an approved battery product may indicate a good battery product and/or a standard battery product. In examples, a battery product that is not a nonconforming battery product may be generally considered (referred to) as an approved battery product.

Herein, a reject mark or the reject mark may generally refer to a feature that, when detected by the detecting unit, is configured to allow a determination that the battery product carrying it is a nonconforming battery product. In some examples, the reject mark may be implemented as or in a visual indication placed on a battery product to allow the automated battery manufacturing system to determine that it is a nonconforming battery product. A reject mark may be provided so as to be visually recognized and to indicate that the battery product carrying it is a nonconforming battery product. The reject mark may visually indicate the presence of a nonconforming product. Examples of a reject mark may include a stamp, a symbol, a text, an area of specific color(s) or a pattern, or any combination thereof.

Additionally or alternatively, the reject mark may be a feature that allows for retrieval of information that the battery product carrying it is a nonconforming battery product. For example, the reject mark may be implemented or included in an identifier of a battery product. The identifier may allow for retrieval of information about said battery product. If the reject mark is implemented in the identifier, the identifier may allow for retrieval of information that said battery product is a nonconforming battery product. For example, the reject mark may be detectable by the detection unit when the detection unit reads the identifier of a battery product, if the reject mark is implemented in the identifier of said battery product.

The identifier of a battery product may refer to a code that can be read and interpreted by a machine (e.g., by a decoder) to identify the respective battery product and/or to distinguish it from other battery products. The identifier may contain information about the respective battery product, and/or a hyperlink to data stored in a database containing such information, thereby allowing for retrieval of information about said battery product. For example, the information related to the production of the respective battery product may include one or more of the following: date of production, time of production, batch number, responsible supervisor, production site, production line, serial code and product number. Any, some or the entirety of the aforementioned parts of the information may be used to determine that the battery product carrying the respective identifier is a nonconforming battery product. For example, specific date and time of production of a battery part may be known to result in nonconforming battery products. Additionally or alternatively, a specific batch number known to contain nonconforming battery products. Additionally or alternatively, a responsible supervisor, a production site, a production line, a serial code and/or a product number may be linked with the information that the corresponding battery products are considered as nonconforming battery products.

Additionally or alternatively, the reject mark may comprise, or be implemented as or in, multiple respective identifiers of nonconforming battery products.

According to an embodiment, the reject mark may be implemented as or in a machine-readable visible indication that includes encoded data and/or directs to data stored in a database. Particularly, the reject mark may be implemented as or in a barcode or a two-dimensional matrix code as described further below. This may further facilitate the operation of the system and the method in an automated plant or smart factory.

According to an embodiment, the system further comprises a control unit configured to retrieve the reject mark and provide the same to the detection unit. The control unit may comprise, or be connected with, a processor and/or a memory for this purpose. The control unit may be further operable to control any, some or each of the processes performed by the system disclosed herein. Alternatively or additionally, the control unit may execute the (automated) battery manufacturing method disclosed herein, and/or the instructions stored in the machine-readable medium disclosed herein.

Consequently, the reject mark may be updated before the detection unit scans a battery product for the reject mark. Accordingly, the exclusion of a nonconforming battery product may be performed in a more accurate manner.

According to an embodiment, the method further comprises receiving the reject mark via a user interface and/or via a communication network. In particular, the reject mark may be input by a human operator on spot (i.e., in a vicinity of the detection unit) or remotely, for example via a communication network. Alternatively or additionally, the reject mark may be stored in a cloud or on a remote server, and the control unit may access the cloud or the remote server to retrieve the reject mark. In particular, the reject mark may be provided such that data or a hyperlink become available after decoding, the hyperlink enabling retrieval of data stored in a database, for example on a remote server or a storage physically present in vicinity of the detection unit.

There may be multiple different reject marks, and an indefinite expression "a" reject mark may be used hereinafter to indicate that the passage refers to one of possible reject marks. At the same time, where the definite form "the" reject mark is used, especially for the correctness of the language, the corresponding passage is not intended to be limited to one single reject mark unless indicated otherwise. In particular, the definite term "the" reject mark may be used herein and in the claims as a collective term for a reject mark or multiple reject marks. It should become clear to the skilled person from the context, whether the term reject mark is used as one of possible reject marks or as a collective term.

Herein, the detection unit may refer to a device or a set of devices configured to automatically detect a reject mark on a battery product. Additionally or alternatively, the detection unit may be configured to detect a reject mark on multiple battery products, either one battery product at a time or a set of battery products at a time (i.e., in groups). The detection unit may additionally include any, some or each of the features described below with respect to the detection unit.

The detection unit may be configured to scan multiple battery products for a reject mark, either one battery product at a time or a set of battery products at a time (i.e., in groups). As mentioned above, the general expression of detecting a reject mark on "a" battery product may encompass that the detection unit may be configured to detect a reject mark on one or more battery products, either one at a time or a set of battery products at a time (i.e., in groups). Also, detecting a reject mark on "a" battery product may encompass detecting a reject mark on multiple battery products, either one battery product at a time or a set of battery products at a time (i.e., in groups).

The detection unit comprises an optical scanner that is configured to optically detect and verify a reject mark on a battery product. The detection unit may be or include one or more barcode scanners. The one or more barcode scanners may be a fixed-mount or movable. The one or each of the barcode scanners may be or include a laser scanner, a linear imager, a 2D imager and/or a camera-based scanner. The detection unit and the reject mark may be provided such that the detection unit is configured to detect and to translate (to decode) the reject mark. In a specific example, the detection unit may be configured to detect (to decode) a barcode and/or a two-dimensional matrix code that contains a 23-byte alphanumeric information.

In an embodiment, the detection unit may comprise a barcode scanner or a scanner for two-dimensional matrix codes. The type of barcode scanner may correspond to the format of the reject mark. In such an embodiment, the reject mark may be implemented as or in a barcode and/or a two-dimensional matrix code. The terms barcode and two-dimensional matrix code may be used herein as commonly understood in the fields of industrial processing and production management. In particular, the barcode or the two-dimensional matrix code may refer to a code, a symbol and/or a pattern in a visual machine-readable form. The barcode or the two-dimensional matrix code may be provided in any available format or any proper new format. Some examples of barcode formats include Code 25, Code 39, Code 128, European Article Number (EAN 2, EAN 5, EAN-8, EAB-13, EAN 128 or the like), ITF and Universal Product Code (UPC-A, UPC-E or the like). Some examples of two-dimensional matrix code formats include Aztec Code, Data Matrix, JAB Code, PDF417 and QR code. It is understood that these are only some prominent examples and the scope of the invention is not limited thereto.

The detection unit may comprise a device configured to optically detect and interpret a barcode and/or a two-dimensional matrix code. In particular, the detection unit may include a light source, for example a laser light source or a LED, configured to emit a light beam onto a scanned area. As such, the light source may be capable of illuminating a barcode and/or a two-dimensional matrix code, thereby allowing for easy detection and interpretation thereof. Additionally, the detection unit may comprise a sensor configured to detect a reflected light from a barcode and/or two-dimensional matrix code. The sensor may be configured to capture a pattern of the reflected light and to convert it into an electrical signal. Further, the detection unit may comprise a decoder configured to process the electrical signal from the sensor by analyzing the pattern of the reflected light and translating it into a machine-readable code and/or a human-readable code, for example an alphanumeric code. The resulting code may correspond to encoded data, i.e., data that have been encoded in the barcode or the two-dimensional matrix code. Alternatively or additionally, the resulting code may contain a hyperlink that directs to data stored in a database.

The use of a barcode scanner is an example. Additionally or alternatively, the detection unit may comprise another device or involve a different mechanism for detecting a reject mark. For example, the detection unit may be configured to detect a reject mark on a battery product through any sensible feedback, such as a haptic feedback, a vibrational feedback, a temperature feedback, an acoustic feedback, an electric feedback, a magnetic feedback or an electromagnetic feedback, that is present on the battery product. For this purpose, the detection unit may comprise a corresponding sensor. An optical scanner may facilitate the implementation.

Herein, the transport unit refer to a device or a set of devices configured to automatically transport a battery product to the detection unit. Additionally or alternatively, the transport unit may be configured to transport multiple battery products to the detection unit, either one battery product at a time or a set of battery products at a time (i.e., in groups).

Also in this respect, a general term of "a" battery product is used that may also encompass transporting a single battery product or transporting multiple battery products either one battery product at a time (e.g., in a sequence) or as a set of battery products at a time (i.e., in groups). The transport unit may be configured to transport multiple battery products. The transport may be executed either one battery product at a time or as a set of battery products at a time (i.e., in groups) (i.e., in groups).

The transport unit may include one or more devices configured to transport the battery product to the detection unit. For this purpose, the transport unit may include one or more conveyors for transporting the battery product along a predetermined path or route. The transport unit, particularly the conveyor(s), may include a moving surface to carry a battery product,

The transport unit may comprise one or more conveyors configured to transport a battery product to the detection unit. Additionally or alternatively, the transport unit may include one or more conveyors configured to transport a battery product, particularly a nonconforming battery product, from the detection unit to the removal unit. Additionally or alternatively, the transport unit may include one or more conveyors configured to transport a battery product from an unpacking unit (described below) to the detection unit. Additionally or alternatively, the transport unit may include one or more conveyors configured to transport a battery product from the detection unit to the packaging unit (described below). The one or more conveyors as mentioned above may form one single conveyor or arranged as separate conveyors.

Additionally or alternatively, the transport unit may comprise one or more manipulator devices. The one or more manipulator devices may refer to devices as known from the fields of robotics and automation. In particular, the one or more manipulator devices may (each) include one or more gantry robots and/or one or more robotic arms. The one or more manipulator devices may be configured to move a battery product toward the detection unit. For example, the one or more manipulator devices may be configured to move a battery product on the one or more conveyors of the transport unit. In particular, the one or more manipulator devices may be configured to move a battery product from an input package, in which the battery product is supplied to the system, onto the one or more conveyors and/or to the detection unit.

In specific examples, the detection unit may be arranged in a fixed-mounted manner in a scan area of the system. The transport unit may (be configured to) transport a battery product and place it in the scan area. In particular, the transport unit may (be configured to) place the battery product such that the detection unit can scan a surface, or a partial area thereof, of the battery product. In some examples, the detection unit may be configured to increase or decrease a distance to the battery product. Additionally or alternatively, the

In specific examples, the transport unit may be configured to move a battery product into a vicinity of the detection unit. The transport unit may (be configured to) transport a battery product into a position in which the detection unit can search for a reject mark on the battery product. Alternatively or additionally, the transport unit may (be configured to) transport a battery product into a predetermined position, and the detection unit may be configured to be moved close to this predetermined position and to search for a reject mark. Such an operation may also be considered as transporting the battery product to the detection unit.

In specific examples, the transport unit may be further configured to move a set of battery products in a specifically arranged manner to the detection unit. A specific arrangement of the set of battery products may facilitate, or be required for, a proper detection of a reject mark. The specific arrangement of the set of battery products may depend on a time required for the detection unit to properly detect a reject mark. Additionally, the specific arrangement of the set of battery products may depend on a processing speed of the system, particularly a rate (units per time) at which battery products are supplied to the detection unit. For example, the specific arrangement of the set of battery products may include a predetermined pitch between neighboring battery products that are transported by the transport unit to the detection unit.

In specific examples, the detection unit may be installed at the transport unit. For example, the detection unit may be attached to a manipulator device of the transport unit. Accordingly, the detection unit may be configured to detect a reject mark on a battery product while being transported by the transport unit. This example may also be considered as the transport unit transporting the battery product to the detection unit.

Herein, the removal unit refer to a device or a set of devices configured to automatically remove a battery product. The removal unit may be configured to remove a battery product automatically once it has been transported to the removal unit by the transport unit. Removing a battery product may indicate that said battery product is taken out of a product flow. In particular, removing a battery product may indicate that said battery product is excluded from further distribution, particularly to a supply chain and/or a customer. The removal unit may be configured to remove a battery product or multiple battery products. In particular, the removal unit may be configured to remove a battery product from a normal path or a normal sequence of production movement within the automated battery manufacturing system, the automated battery manufacturing method or a supply chain. For example, the removal unit may be or include a container for storing, permanently or temporarily, one or more battery products. The battery product that has been removed by the removal unit may be discarded, destroyed, or recycled.

According to an embodiment, the battery product is one of a plurality of battery products. Accordingly, the automated battery manufacturing system may be provided with the plurality of battery products. For example, the plurality of battery products may be provided as an input package, in which the plurality of battery products are arranged in a specific manner. As explained above, the term "a battery product" is used herein without loss of generality. Thus, "a" battery product as used herein indicates a random or arbitrary battery product from the plurality of battery products rather than a specific (selected) one from the plurality of battery products.

According to an embodiment, the method further comprises receiving an input package comprising a pallet supporting one or more fixed-form frames of a uniform size, wherein a plurality of battery products are accommodated in the one fixed-form frame or in each of the fixed-form frames; unpacking the battery products of the plurality of battery products from the input package one fixed-form frame at a time; and executing the battery manufacturing method as described herein for each of the battery products.

Furthermore, where the following description refers to the plurality of battery products being processed (e.g., transported, scanned for a reject mark, removed, moved, arranged, packaged, unpacked, etc.) this processing may be performed one battery product at a time or a set of battery products at a time (i.e., in groups), unless indicated otherwise or technically inappropriate.

According to an embodiment, the transport unit is configured to transport the plurality of battery products to the detection unit. The detection unit is configured to detect a reject mark on each of the plurality of battery products.

Thus, the speed and accuracy of the process of automatically excluding nonconforming battery products from the plurality of battery products may be increased. Consequently, a throughput of the battery manufacturing may be increased. Hence, a system or a method may be provided that is facilitated for implementation for mass production, particularly in an automated plant and/or a smart factory.

According to an embodiment, each battery product of the plurality of battery products carries a respective identifier of a set of identifiers. In this embodiment, one identifier of the set of identifiers is, or comprises, a reject mark. Alternatively in this embodiment, multiple identifiers of the set of identifiers each are, or each comprise, a respective reject mark.

In other words, a reject mark may be implemented as or in one, some or all of the identifiers that the plurality of battery products each carry. Here, as explained above, the indefinite term "a" reject mark is used to encompass embodiments where there are multiple different reject marks.

The identifier or the identifiers may (each) refer to a code that can be read and interpreted by a machine (e.g., by a decoder) to identify the respective battery product and/or to distinguish it from other battery products. In some examples, the identifier may be or contain information related to the production of the respective battery product. Alternatively or additionally, the identifier may contain a hyperlink to data stored in a database containing information related to the production of the respective battery product. For example, the information related to the production of the respective battery product may include one or more of the following: date of production, time of production, batch number, responsible supervisor, production site, production line, serial code and product number.

The identifier of the battery product, or any, some, or all of the identifiers of the plurality of battery products, may each be or include a barcode or a two-dimensional matrix code. A barcode and a two-dimensional matrix code may be as described above and may be used herein as understood in the fields of industrial processing and production management.

In this embodiment, the detection unit may search each of the plurality of battery products for a reject mark. In particular, the detection unit may scan an area corresponding to a position on each the battery product where the respective identifiers is (supposed to be) located. If the detection unit detects a reject mark in one of the identifiers of the plurality of battery products, the transport unit may transport the corresponding battery product to the removal unit. In other words, if the detection unit detects an identifier that is or comprises a reject mark, the transport unit may transport the corresponding battery product to the removal unit.

Similarly, in an embodiment where a single battery product is provided to the system, this single battery product may carry an identifier. As described above, the detection unit of the system may scan this battery product, in particular where its identifier is (supposed to be) located. If the detection unit detects a reject mark in the identifier of the battery product, the transport unit may transport this battery product to the removal unit. In other words, if the detection unit detects that the identifier is or comprises a reject mark, the transport unit may transport the corresponding battery product to the removal unit.

In this manner, the identifier about each of the plurality of battery products may be utilized to be indicative of, contain or contain a hyperlink to, information about whether or not the respective battery product is an approved battery product or a nonconforming battery product. Hence, the implementation of the system and method as disclosed herein in an industrial (automated) plant, smart factory and the like may be further facilitated.

According to an embodiment, the system further comprises an unpacking unit. The unpacking unit is configured to receive an input package including the plurality of battery products and to unpack battery products of the plurality of battery products from the input package. In one embodiment, the transport unit may be configured to sequentially transport the plurality of battery products, individually and/or in groups, from the unpacking unit to the detection unit. In another embodiment, the unpacking unit may be configured to move the battery products directly to the detection unit. In this embodiment, the unpacking unit may be considered as part of the transport unit.

Consequently, the system and method may be configured to automatically operate upon delivery of the input package. Hence, a degree of automation may be further increased. The implementation of the system and method as disclosed herein in an automated plant or a smart factory may be further facilitated.

The input package may be as introduced above and refer to a physical unit, in which the plurality of battery products are arranged in a specific manner. In particular, the plurality of battery products may be arranged in a stack of layers in the input package. The input package, or any of its tray as introduced above, may comprise one or more fixed-form frame each configured (e.g., shaped and dimensioned such) to safely accommodate the plurality of battery products, particularly in a manner maintaining a gap between neighboring battery products. For example, each layer of the stack of layers of the input package may contain a fixed-form frame and a predefined number of battery products of the plurality of battery products accommodated therein in a specific arrangement.

Herein, unpacking may refer to a process of removing the battery products from the input package and moving them to the transport unit and/or to the detection unit. Additionally or alternatively, the unpacking may include a process of opening the input package for accessing the plurality of battery products accommodated therein. The unpacking may further include a process of removing any parts of the input package other than the plurality of battery products for accessing the plurality of battery products accommodated in the input package.

Herein, the unpacking unit may be or comprise a device or devices configured to unpack the plurality of battery products from the input package. In particular, the unpacking unit may comprise one or more manipulator devices, such as one or more gantry robots and/or one or more robotic arms, configured to remove one or more battery products from the input package The unpacking unit may be pre-programmed such to accurately pick up battery products from the input package. The unpacking unit may be pre-programmed such to arrange one or more battery products according to a predefined arrangement, for example, with a gap between neighboring battery products, or in a predefined two-dimensional pattern. The arrangement of the battery products may depend on the requirements of the detection unit and/or the arrangement of the transport unit.

According to an embodiment, the input package comprises a pallet supporting one or more fixed-form frame of a uniform size, wherein the plurality of battery products are accommodated in the one fixed-form frame or in each of the fixed-form frames. The unpacking unit is configured to unpack the battery products of the plurality of battery products from the input package one fixed-form frame at a time. The fixed-form frame may be also referred to as a tray.

Consequently, the system and method may be operable for processing the plurality of battery products from the input package, in which the battery products are arranged in a defined manner. Hence, the processing speed of the plurality of battery products may be further increased, and the implementation of the system and method disclosed herein in an automated plant or smart factory may be further facilitated.

According to an embodiment, the system further comprises a packaging unit. The transport unit is further configured to selectively transport the battery product from the detection unit to the packaging unit in response to the detection unit not detecting the reject mark on the battery product. The packaging unit is configured to package the battery product in an output package.

As described above, the detection unit may scan a battery product for a reject mark. If a reject mark is detected on the battery product, the battery product may be recognized as a nonconforming battery product (or a no-good battery product), which is transported by the transport unit to the removal unit. If no reject mark is detected on the battery product, the battery product may be recognized as an approved battery product (or a good battery product), which is transported to the packaging unit.

Herein, the packaging unit may be or comprise a device or devices configured to package the battery product in the output package. Furthermore, the packaging unit may be configured to package a remainder of the plurality of battery products, that is the plurality battery products except for the nonconforming battery product(s) that has or have been removed, in the output package.

The output package may refer to a physical unit in which the remainder of the plurality of battery products are arranged in a specific manner. In particular, the remainder of the plurality of battery products may be arranged in a stack of layers in the output package. The output package, or any of its tray, may comprise one or more fixed-form frame each configured (e.g., shaped and dimensioned such) to safely accommodate the remainder of the plurality of battery products, particularly in a manner maintaining a gap between neighboring battery products. For example, each layer of the stack of layers of the output package may contain a fixed-form frame and a predefined number of battery products of the remainder of the plurality of battery products accommodated therein in a specific arrangement.

Consequently, the system and method may allow for receiving an input package, which contains battery products including approved and nonconforming battery products, and outputting an output package, from which the nonconforming battery products have been excluded. Furthermore, the output package may be configured to have a similar or same structure as the input package. Such embodiments may further facilitate the overall operation of the system and the execution of the method.

Furthermore, the output package may comprise a pallet supporting one or more fixed-form frames of a uniform size, wherein the remainder of the plurality of battery products are accommodated in the one fixed-form frame or in each of the fixed-form frames. The packaging unit may be configured to package the remainder of the plurality of battery products in the output package layer-by-layer by stacking one fixed-form frame on another. The fixed-form frame may be also referred to as a tray. The fixed-form frame or each of the fixed-form frames may have slots for accommodating the remainder of the plurality of battery products. The slots may be configured (e.g., dimensioned and shaped such) to each accommodate an approved battery product in a safe manner. Furthermore, the slots may be arranged such to maintain a gap between the battery products in the fixed-form frame.

In addition, the packaging unit may be configured to arrange the battery product in a specific orientation. In particular, the arrangement plan may include that the battery product be placed in a specific orientation, for example in terms of the placement of the positive and negative electrode leads that protrudes from a battery case.

According to an embodiment, the system further comprises a package transfer line configured to provide a container to the packaging unit. The output package incorporates the container. The packaging unit is configured to arrange the battery product in the container according to an arrangement plan.

Consequently, the container for constructing an output package may be automatically provided. Hence, the implementation of the system and method in an automated plant or smart factory may be even further facilitated.

In particular, in examples where the output package comprises a pallet and one or more fixed-form frames stacked upon each other, the container may refer to the pallet and/or the one or more fixed-form frames. Furthermore, the container (including, for example, a pallet and one or more fixed-form frames) may be retrieved from an unpacking unit, for example from the unpacking unit as described above. Particularly, the container including, for example, a pallet and one or more fixed-form frames, may be retrieved from emptying an input package. This may allow for re-using the same components as received at an input of the system.

According to an embodiment, the system may further comprise an additional detection unit upstream of the packaging unit in terms of a processing direction of the system. In particular, the additional detection unit may be operated between the detection unit and the packaging unit, and/or between the removal unit and the packaging unit. The additional detection unit may be configured to detect a reject mark on a battery product.

Consequently, there may be provided a safety measure for assuring that the battery products transported to the packaging unit are not nonconforming battery products. Hence, the quality expectation of the battery package in the output package may further increase.

According to an embodiment, the transport unit comprises a conveyor configured to move the battery product to the detection unit. The transport unit is further configured to keep a predetermined clearance before and after the nonconforming battery product on the conveyor in terms of a conveying direction of the conveyor toward the detection unit. Herein, the conveying direction may refer to a direction of a path or route along which a battery product is transported by the respective conveyor.

Consequently, the transport unit is configured to position the battery product in a proper manner for the detection unit. In examples where the battery product is one of a plurality of battery products, the transport unit may be configured to position the plurality of battery products in a manner to be distanced from one another according to the requirements of the detection unit. This may contribute to a proper operation of the detection unit.

According to an embodiment, the system comprises the unpacking unit as described herein, the transport unit as described herein, the detection unit as described herein, the removal unit as described herein and the packaging unit as described herein. Optionally, the system may further comprise the additional transport unit as described herein. In other embodiments, the unpacking unit or the packaging unit may be omitted. The (automated) battery manufacturing method may be embodied correspondingly.

According to an embodiment, the transport unit may comprise a first conveyor, a second conveyor, a first manipulator device and a second manipulator device. The first conveyor may be configured to transport a battery product to the detection device, toward the detection device and/or from the unpacking device to the detection device. The first manipulator device may be configured to transport a battery product from an input package or from the unpacking unit to the transport unit. The second manipulator device may be configured to transport the battery product to the removal unit, if a reject mark is detected on the battery product by the detection unit, and to transport the battery product to the second conveyor, if no reject mark is detected on the battery product. The second conveyor may be configured to transport the (approved) battery product to the packaging unit.

The first conveyor and the second conveyor may be each configured as described above or in a corresponding manner. The first conveyor and the second conveyor may each comprise a moving surface to transport the battery product thereon along a defined path or route. The first manipulator device and/or the second manipulator device may be or comprise a gantry robot and/or a robotic arm to perform the aforementioned task.

### BRIEF DESCRIPTION OF THE DRAWINGS

FIG. 1 shows a schematic view of an automatic battery manufacturing system according to an example.
FIG. 2 shows a schematic view of an automatic battery manufacturing system according to an example.
FIG. 3 shows a schematic view of an automatic battery manufacturing system according to an example.
FIG. 4 shows a schematic view of an automatic battery manufacturing system according to an example.

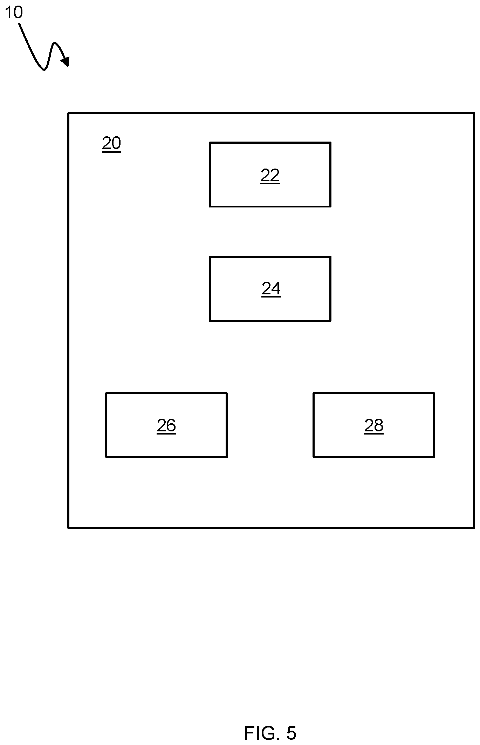

FIG. 5 shows a schematic view of a machine-readable storage according to an example.

### DETAILED DESCRIPTION

In the following, detailed examples are described in connection with the drawings. It is noted that the features that have been described above will not be repeated for the sake of conciseness. It is understood that any, some or all of the corresponding features described above may be implemented to the corresponding components unless indicated otherwise or technically inappropriate. Like components and features are labelled with same or related reference signs in the drawings and in the following description.

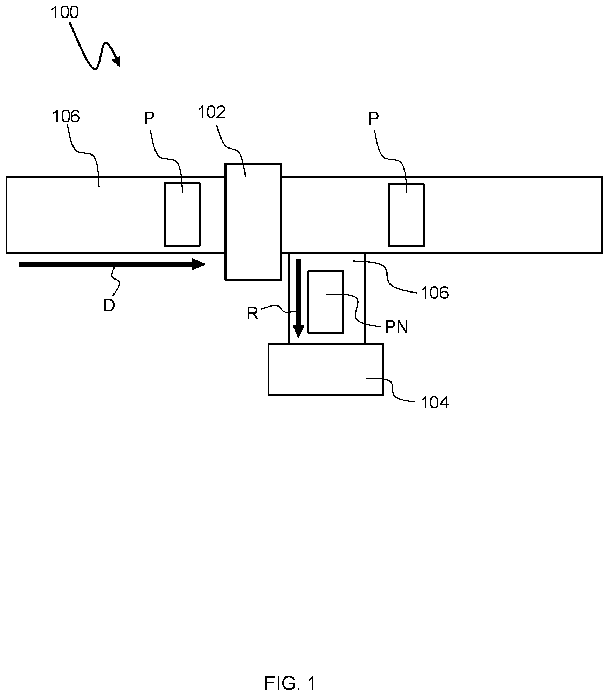

FIG. 1 shows an automatic battery manufacturing system 100, referred to herein as a system 100. The system 100 may be included in an automated plant, particularly a smart factory. As such, the example shown in FIG. 1 may provide a partial view of an automated plant or a smart factory. The system 100 comprises a detection unit 102, a removal unit 104 and a transport unit 106.

The system 100 may include or implement any, some or all of the features described herein with respect to the automated battery manufacturing system. Furthermore, the system 100 may be configured to carry out the automated battery manufacturing method as described herein, optionally including any, some or all of the additional features described herein with respect to the automated battery manufacturing method. In particular, the system 100 may be configured to receive and implement instructions stored on/in a machine-readable storage medium that, when executed by a processor, cause it to perform an (automated) battery manufacturing method as disclosed herein.

The system 100 may be configured to carry out a battery manufacturing method, comprising: transporting (by the transport unit 106) the battery product P to the detection unit 102; by the detection unit 102, searching for a reject mark on the battery product P; if a reject mark is found on the battery product P, recognizing that the battery product P is a nonconforming battery product, and forwarding the nonconforming battery product to the removal unit 104; and if no reject mark is found on the battery product P, recognizing that the battery product P is an approved battery product, and forwarding the approved battery product P to a packaging unit (not shown in FIG. 1).

The system 100 receives a battery product P. The detection unit 102 is configured to detect a reject mark on the battery product P. The removal unit 104 is configured to remove the battery product P, in particular in response to the detection unit 102 detecting the reject mark on the battery product P. The transport unit 106 is configured to transport the battery product P to the detection unit 102. Further, the transportation unit 106 is configured to transport the battery product to the removal unit 104 in response to the detection unit 102 detecting the reject mark on the battery product P.

The detection unit 102 may include or implement any, some or all of the features described herein with respect to the detection unit. The removal unit 104 may include or implement any, some or all of the features described herein with respect to the removal unit. The transport unit 106 may include or implement any, some or all of the features described herein with respect to the transport unit.

The battery product P may include or implement any, some or all of the features described herein with respect to a battery product. Herein, it may be referred to an indefinite term "a" battery product for reasons described herein.

The reject mark may include or implement any, some or all of the features described herein with respect to a reject mark. Herein, it may be referred to an indefinite term "a" reject mark for reasons described herein.

In the system 100 shown in FIG. 1, the battery product P may be moved by the transport unit 106 to the detection unit 102, as symbolized by an arrow D. The battery product P may carry or may not carry a reject mark. The detection unit 102 may scan the battery product P for a reject mark. If the detection unit 102 detects a reject mark on the battery product, the transport unit 106 may transport the battery product P to the removal unit 104. Additionally, the system 100 may recognize the battery product P as a nonconforming battery product, which may be defined and/or implemented in the above-described manner.

If the detection unit 102 does not detect a reject mark (or finds no reject mark) on the battery product P, the transport unit 106 may transport the battery product P for finishing and/or for further processing, e.g., for packaging, for storage or for delivery.

In this manner, an automated system and/or an automated method, which may be provided in a machine-readable storage as described herein, may be provided that achieve reduction of the cost, time requirement and energy consumption for a battery manufacturing process. Furthermore, the implementation of the battery manufacturing process in an automated plant, such as a smart factory, may be facilitated.

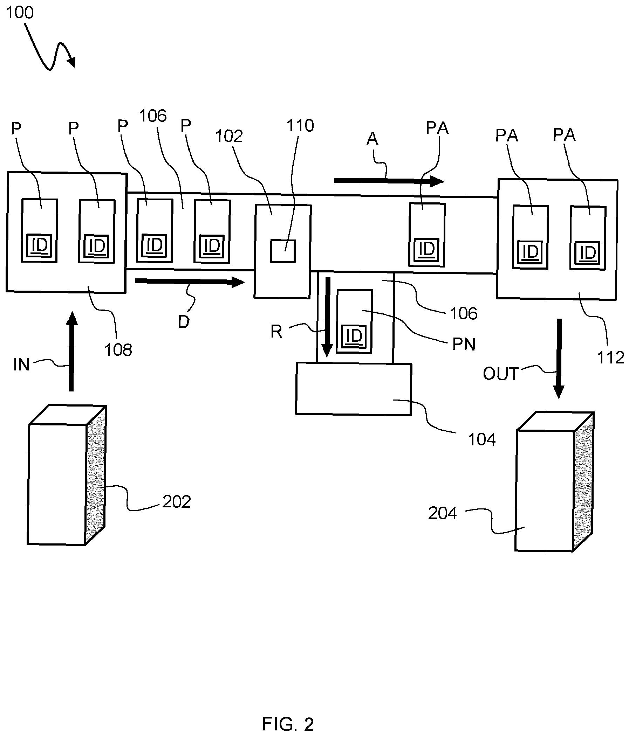

FIG. 2 shows another example of an automatic battery manufacturing system 100, which may also be referred to as a system 100. The system 100 may be included in an automated plant, particularly a smart factory. As such, the example shown in FIG. 2 may provide a partial view of an automated plant or a smart factory.

The system 100 as shown in FIG. 2 may include or implement any, some or all of the features described herein with respect to the automated battery manufacturing system. In particular, the system 100 as shown in FIG. 2 may comprise or implement any, some or all of the features of the system 100 as described above with reference to FIG. 1. Furthermore, the system 100 as shown in FIG. 2 may be configured to carry out the automated battery manufacturing method as described herein, optionally including any, some or all of the additional features described herein with respect to the automated battery manufacturing method. In particular, the system 100 may be configured to receive and implement instructions stored on/in a machine-readable storage medium that, when executed by a processor, cause it to perform an (automated) battery manufacturing method as disclosed herein.

In FIG. 2, the system 100 comprises a detection unit 102, a removal unit 104, a transport unit 106, an unpacking unit 108, a barcode scanner 110 and a packaging unit 112. The system 100 in FIG. 2 receives an input package 202 containing a plurality of battery products. The battery product P as described above may be one, in particular an arbitrary one, of the plurality of battery products. The system 100 in FIG. 2 outputs an output package 204 containing a plurality of approved battery products. For example, the battery product P as described above may be contained in the output package 204, if no reject mark is detected on the battery product P. The battery product P as described above may be excluded from the output package 204, if a reject mark is detected on the battery product P.

Any, some, any or each of the plurality of battery products may include or implement any, some or all of the features described herein with respect to a battery product. With reference to FIG. 2, it may be referred to an indefinite term "a" battery product P to indicate one of the plurality of battery products for reasons described herein.

The detection unit 102 is configured to detect a reject mark on the battery product P. The detection unit 102 may include or implement any, some or all of the features described herein with respect to the detection unit, in particular any of the features described above with respect to FIG .1, unless indicated otherwise or technically inappropriate.

The reject mark may include or implement any, some or all of the features described herein with respect to a reject mark. Herein, it may be referred to an indefinite term "a" reject mark for reasons described herein.

In the system 100 shown in FIG. 2, the unpacking unit 108 is configured to receive the input package 202 including the plurality of battery products and to unpack battery products of the plurality of battery products from the input package. The unpacking unit 108 may include or implement any, some or all of the features described herein with respect to the transport unit. In particular, the unpacking unit 108 unpacks some or all battery products P of the plurality of battery products from the input package 202, which is symbolized by arrow IN in FIG. 2. For this purpose, the unpacking unit 108 may comprise one or more gantry robots and/or one or more robotic arms, or other manipulator devices.

The input package 202 may comprises a pallet supporting one or more fixed-form frames of a uniform size (not shown). The plurality of battery products may be accommodated in the one fixed-form frame or in each of the fixed-form frames. The fixed form frames may also be referred to as a tray. The unpacking unit 108 may be configured to unpack the battery products P of the plurality of battery products from the input package 202 one fixed-form frame at a time (i.e., in a tray-by-tray manner).

The transport unit 106 is configured to sequentially transport the plurality of battery products, individually and/or in groups, from the unpacking unit 108 to the detection unit 102, as symbolized by arrow D.

Each or some of the plurality of battery products carries a respective identifier ID. A collective of different identifiers that are used in the plurality of battery products may be referred to as a set of identifiers. One identifier of the set of identifiers may be or comprise a reject mark. Alternatively, multiple identifiers of the set of identifiers each are or comprise a respective reject mark. The identifier may include or implement any, some or all of the features of an identifier as described herein. For example, the identifier ID may be a machine-readable visible indication on a surface of the respective battery product P. In particular, the identifiers ID of the plurality of battery products may be located at a same position on each battery product P, as illustrated in FIG. 2. Specifically, the identifiers ID of the plurality of battery products may be provided each as a barcode and/or a two-dimensional matrix code, which may be provided in any of the manner described herein.

The detection unit 102 in FIG. 2 comprises the barcode scanner 110. The barcode scanner 110 may be configured to read and decode the identifiers of the plurality of battery products. The barcode scanner 110 may be configured to read and decode a barcode and/or a two-dimensional matrix code, in which the identifiers ID may be provided. The barcode scanner 110 may be arranged so as to optically scan an area that corresponds to a position of the identifiers ID of the battery products P. The barcode scanner 110 may be movable toward and away from a battery product P that is currently placed close to the barcode scanner 110. The barcode scanner 110 may include or implement any, some or all of the features of a barcode scanner as described above.

The identifier ID of each of the plurality of battery products may be read and decoded the barcode scanner 110. One or some of the identifiers of the plurality of battery products may be a reject mark. The information, whether or not an identifier is a reject mark, may be retrieved from a remote server or storage and/or entered by a human supervisor on spot (i.e., in a vicinity of the system 100 with access to a control unit thereof).

The transport unit 106 is configured to transport the plurality of battery products from the unpacking unit 108 to the detection unit 102, as illustrated by arrow D. The transportation unit 106 is configured to transport a nonconforming battery product PN to the removal unit 104 in response to the detection unit 102 detecting a reject mark on that battery product P (e.g., its identifier ID being a reject mark). Further, the transportation unit 106 is configured to transport an approved battery product PA to the packaging unit 1012 in response to the detection unit 102 detecting no reject mark on that battery product P (e.g., its identifier ID not being a reject mark). The transport unit 106 may include or implement any, some or all of the features described herein with respect to the transport unit, in particular any of the features described above with respect to FIG .1, unless indicated otherwise or technically inappropriate.

If the detection unit 102 detects a reject mark on a (given) battery product P (currently at place), i.e., if the identifier ID of this battery product P is a reject mark, this battery product P is recognized as a nonconforming battery product PN. The transport unit 106 transports the nonconforming battery product PN to the removal unit 104, as illustrated by arrow R.

The removal unit 104 is configured to remove a battery product P in response to the detection unit 102 detecting a reject mark on the battery product P. The removal unit 104 may include or implement any, some or all of the features described herein with respect to the removal unit, in particular any of the features described above with respect to FIG .1, unless indicated otherwise or technically inappropriate.

If the detection unit 102 detects no reject mark on the battery product P, i.e., if the identifier ID of this battery product P is not a reject mark, this battery product P is recognized as an approved battery product PA. The transport unit 106 transports the approved battery product PA to the packaging unit 104, as illustrated by arrow A.

The packaging unit 112 is configured to package one or more approved battery products PA in the output package 204, as illustrated by arrow OUT. The output package 204 may be prepared for storage or delivery. The packaging unit 112 may include or implement any, some or all of the features of a packaging unit as described herein.

The package transfer line configured to provide a container to the packaging unit, wherein the output package incorporates the container, wherein the packaging unit is configured to arrange the battery product in the container according to an arrangement plan.

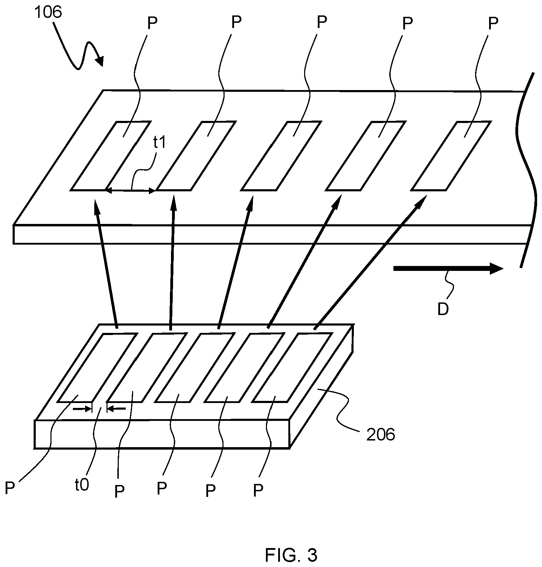

FIG. 3 shows a partial view of a system 100 according to an example. The example shown in FIG. 3 may be part of the system 100 in FIG. 1 or FIG. 2. Thus, the description above with reference to FIG. 1 or 2 may apply accordingly to the example of FIG. 3, unless indicated otherwise or technically inappropriate.

In FIG. 3, a fixed-form frame 206 is shown, in which multiple battery products P are accommodated. The fixed-form frame 206 may be part of an input package, for example the input package 202 as described above with reference to FIG. 2. The fixed-form frame 206 may provide slots each to accommodate one battery package P in a fixed manner and at a distance from neighboring battery products. For this purpose, the fixed-form frame 206 may be formed of a rigid material. The fixed-form frame 206 may also be referred to as a tray. The fixed-form frame 206 may include or implement any, some or all of the features of a fixed-form frame as disclosed herein.

As shown in FIG. 3, the battery products P accommodated in the fixed-form frame 206 may be transported (transferred) to the transport unit 106. In particular, the battery products P accommodated in the fixed-form frame 206 may be transported onto a moving surface of a conveyor of the transport unit 106. At the same time, a gap between two neighboring battery products P (which may be also referred to as a pitch) may be increased for the sake of a proper operation of the detection unit 102. In the example of FIG. 3, the battery products P are arranged in the fixed-form tray 206 so as to maintain an initial gap to between one another. Further in FIG. 3, the battery products P are arranged such that an arrangement gap t1 between two neighboring battery products P on the conveyor of the transport unit 106 is maintained. The arrangement gap t1 may be larger than the initial gap t0 and/or may be such to fulfil specific requirements of the detection unit 102. The arrangement gap t1 may further depend on the operation speed of the detection unit 102, particularly the barcode scanner 110, and/or a processing speed of the system 110.

The operation (process) of modifying an arrangement of the battery products P, particularly changing a distance between two neighboring battery products P, may be performed by the transport unit 106 or by the unpacking unit 108

Although a parallel and linear arrangement of the battery products P along (or perpendicular to) the processing direction D is shown in FIG. 3, the claimed subject matter is not limited thereto. The battery products P may be arranged in any other suitable arrangement. A pitch between the battery products P may be designed to fulfil the technical requirements.

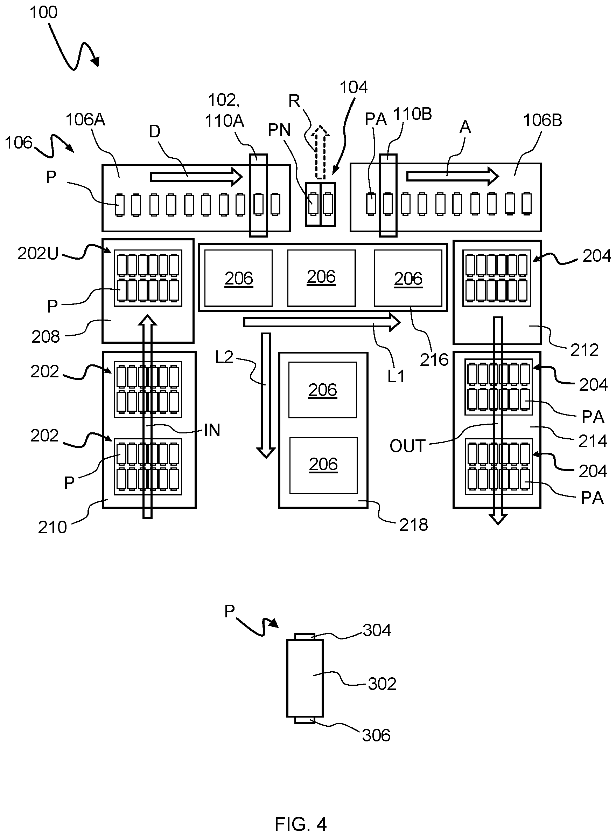

FIG. 4 shows another example of an automated battery manufacturing system 100, which may also be referred to as a system 100. The system 100 of FIG. 4 may be comprise any, some or all of the features of the examples described above with reference to FIG. 1, 2 and 3. For the sake of conciseness, only features and aspect of the system 100 of FIG. 4 that are additional or different from the previous examples will be described in the following.

As schematically and illustrated in enlargement in a bottom part of FIG. 4, the battery products P may be provided as a pouch-type battery cell. The pouch-type battery cell may comprise a case 302 in which an electrode assembly comprising layers of positive electrodes, negative electrode and separators is accommodated and sealed, a positive electrode lead 304 protruding from the case 302 and a negative electrode lead 306 protruding from the case 302. The case 302 may have a flat beam-like shape elongated along a longitudinal direction, and the electrode leads 304, 306 may protrude from a respective end face of the case 302 in the longitudinal direction. Although not shown explicitly, the case 302 may further comprise a degassing portion in form of folded or rolled-up laminate along a lateral side facing a width direction of the case 302. It is understood that the invention is not limited to pouch-type battery cells, and can be applied to any other type of battery cells, such as cylindrical or prismatic.

With the electrode leads 304, 306 protruding from the case 302 of the battery product P, it may be desired to arrange the battery products P in the fixed-form frame 206 so as to have a uniform orientation. The uniform orientation of the battery products P may increase the safety during transport and during an unpacking process. The system as disclosed herein, particularly the transport unit 106 thereof, may be capable of automatically arranging multiple battery products P in a correct orientation so that the safety during transport and during unpacking of the output package 204 may be increased.

In FIG. 4, the system 100 has, in addition to the devices and components as described above, an input area 208, in which one or more input packages 202 are received and processed by an unpacking unit (not explicitly shown in FIG. 4). Furthermore and optionally, the system may comprise a supply area 210 in which one or more unpacked input packages 202 may be supplied to the system 100 and stand prepared to be unpacked, as symbolized by the arrow IN.

The unpacking unit may be provided in any manner described above, and may comprise one or more gantry robots and/or one or more manipulator devices to unpack one or more battery packages P from the input package 202. Although not shown explicitly, Each input package 202 in the example of FIG. 4 may comprise a pallet and one or more fixed-form frames 206 stacked on the pallet and upon each other (if applicable). The unpacking unit may be configured to unpack the input package 202 by taking the battery products P from the uppermost fixed-form frame of the input package 202U that is currently positioned so (e.g., in front of a conveyor of the transport unit 106) as to be processed by the unpacking unit. The unpacking unit may process the input package one battery product at a time, a predefined number of battery products at a time, in a tray-by-tray manner, or the like, wherein a tray corresponds to a fixed-form frame. In the example of FIG. 4, the unpacking unit can pick up 6 battery products at a time, corresponding to a half of the battery products accommodated in a single fixed-form frame of the input package 202. The battery products P may be arranged by the unpacking unit onto a first conveyor 106A of the transport unit 106. For this purpose, the unpacking unit may comprise one or more manipulator devices, such as a gantry robot and/or a robotic manipulator.

Alternatively, the transport unit 106 may be configured to transport one or more battery products P from the input package 202 onto the first conveyor 106A. The transport unit 106 comprise one or more manipulator devices, such as a gantry robot and/or a robotic manipulator.

When placing the battery products P on the first conveyor 106A, the unpacking unit and/or the transport unit 106 may be configured so as to arrange the battery products in a pre-programmed arrangement as described above, in particular in connection with FIG. 3. Specifically, a pre-programmed gap or clearance may be maintained before and after each of the battery products P. The first conveyor 106A of the transport unit 106 may transport one or more of the battery products P to the detection unit 102, as symbolized by arrow D. The first conveyor 106A may be configured as described herein.

The detection unit 102 comprises a barcode reader 110A, which may be referred to as a first barcode reader. The first barcode reader 110A may be configured as described herein. The first barcode reader 110A may be configured to read and decode each of the battery products P as it passes through or by the first barcode reader 110A. As described above, the detection unit 102 is configured to detect a reject mark in this manner.

If the detection unit 102 detects a reject mark on a battery product P, this battery product P is recognized as a nonconforming battery product PN. The transport device 106 then transports the nonconforming battery product PN to the removal unit 104. For this purpose, the transport device 106 may employ one or more gantry robots and/or one or more robotic manipulators (not shown) which may be configured to transport a nonconforming battery product PN to the removal unit 104.

The removal unit 104 is configured to remove a battery product, particularly the nonconform battery product PN, as symbolized by dashed arrow R. The removal unit 104 may be configured as described herein. In particular, the removal unit 104 may perform its task of removing the nonconforming battery product in an automated manner once the nonconforming battery product PN has been transported to the removal unit 104. In the example of FIG. 4, the removal unit 104 has two spots each to receive a nonconforming battery product PN. The transport unit 106, for example a manipulator device of the transport unit 106, may be configured to place a nonconforming battery product PN in one of said slots.

If the detection unit 102 does not detect a reject mark (i.e., if the detection unit 102 detects not reject mark) on a (given) battery product P, this battery product P is recognized as an approved battery product PA in the above-described manner. The transport unit 106 may be further configured to transport any battery product P without a reject mark (i.e., which do not carry a reject mark or on which the detection unit 102 did not detect a reject mark) to or toward the packaging unit 112, which is not shown explicitly in FIG. 4. For this purpose, the transport unit 106 may comprise a second conveyor 106B to transport an approved battery product PA to the packaging unit 112.

Accordingly, an approved battery product PA is transported to or toward the packaging unit 112, as symbolized by arrow A. The packaging unit 112 may comprise one or more manipulator devices to pick up one or more battery products and place it into an output package 204. The output package 204 may be provided in the above-described manner. For example, the packaging unit 112 may place the approved battery product PA into a fixed-from frame of the output package 204.

The output package 204 may be positioned in an output area 212 to be processed (i.e., provided with one or more approved battery products PA) by the packaging unit. The system 100 may further comprise a delivery area 214 in which one or more completed output packages 204 are temporarily retained for further distribution, delivery or storage.

The system 100 in FIG. 4 may further comprise a package transfer line 216 configured to provide a container to the packaging unit. The output package incorporates the container. The packaging unit is configured to arrange the battery product in the container according to an arrangement plan.

The package transfer line 216 and the container may each include or implement any, some or all of the corresponding features as described herein. In particular, the container may be or include a pallet and/or a fixed-form frame (i.e., a tray). In particular, the system 100 and/or the package transfer line 216 may be configured such that an empty fixed-form frame 206 or an empty pallet (not shown) from the input area 208 is transferred to the output area 212, as symbolized by arrow L1, for receiving one or more approved battery products PA. Additionally, the package transfer line 216 may be configured to temporarily retain one or more fixed-form frames 206 in a spare area 218, as symbolized by arrow L2 in FIG. 4. The one or more fixed-form frame 206 from the spare area 218 may be transported by or via the package transfer line 216 to the output area 212 to receive one or more approved battery products PA and thereby to construct an output package 204.

FIG. 4 shows a schematic view of a machine-readable storage 10 storing instructions that, upon execution by a processor, causes the processor to carry out an automated battery manufacturing method 20, or shortly method 20.

According to the automated battery manufacturing method 20, at 22, a battery product is transported to a detection unit. The (or a) battery product and the detection unit may be provided as described above.

At 24, the detection unit searches for a reject mark on the battery product. The searching may involve a barcode scanner as described above. The (or a) reject mark may be provided as described above. The detection unit may be provided as described above.

At 26, if a reject mark is found on the battery product, recognizing that the battery product is a nonconforming battery product, and forwarding the nonconforming battery product to a removal unit. The processing of a nonconforming battery product may be as described above. The removal unit may be provided as described above.

At 28, if no reject mark is found on the battery product, recognizing that the battery product is an approved battery product, and forwarding the approved battery product to a packaging unit. The approved battery product may be provided as described above. The packaging unit may be configured as described above.

### DETAILED DESCRIPTION OF EXAMPLES

- 100: automated battery manufacturing system, system
- 102: detection unit
- 104: removal unit
- 106: transport unit
- 106A, 106B: conveyor
- 108: unpacking unit
- 110: barcode scanner
- 110A, B: barcode scanner
- 112: packaging unit
- 202: input package
- 204: output package
- 206: fixed-form frame, tray
- 208: input area
- 210: supply area
- 212: output area
- 214: delivery area
- 216: package transfer line
- 302: case, battery cell case
- 304, 306: electrode lead

- A, D, R: conveying direction, processing direction
- IN, OUT: processing direction
- L1, L2: package delivery direction
- P: battery product
- PA: approved battery product
- PN: nonconforming battery product

## Claims

1. An automated battery manufacturing system, comprising:
a detection unit configured to detect a reject mark on a battery product;
a removal unit configured to remove the battery product,
a transport unit configured to transport the battery product to the detection unit and to transport the battery product to the removal unit in response to the detection unit detecting the reject mark on the battery product.

2. The system of claim 1,
wherein the battery product is one of a plurality of battery products,
wherein the transport unit is configured to transport the plurality of battery products to the detection unit,
wherein the detection unit is configured to detect the reject mark on each of the plurality of battery products.

3. The system of claim 2,
wherein each battery product of the plurality of battery products carries a respective identifier of a set of identifiers,
wherein:
- one identifier of the set of identifiers is or comprises the reject mark; or
- multiple identifiers of the set of identifiers each are or comprise a respective reject mark.

4. The system of claim 2 or 3, further comprising:
an unpacking unit configured to receive an input package including the plurality of battery products and to unpack battery products of the plurality of battery products from the input package,
wherein the transport unit is configured to sequentially transport the plurality of battery products, individually and/or in groups, from the unpacking unit to the detection unit.

5. The system of claim 4,
wherein the input package comprises a pallet supporting one or more fixed-form frames of a uniform size, with the plurality of battery products accommodated in the one fixed-form frame or in each of the fixed-form frames,
wherein the unpacking unit is configured to unpack the battery products of the plurality of battery products from the input package one fixed-form frame at a time.

6. The system of one of the preceding claims, further comprising:
a packaging unit,
wherein the transport unit is further configured to selectively transport the battery product from the detection unit to the packaging unit in response to the detection unit not detecting the reject mark on the battery product,
wherein the packaging unit is configured to package the battery product in an output package,

7. The system of claim 6, further comprising
a package transfer line configured to provide a container to the packaging unit,
wherein the output package incorporates the container,
wherein the packaging unit is configured to arrange the battery product in the container according to an arrangement plan.

8. The system of one of the preceding claims,
wherein the transport unit comprises a conveyor configured to move the battery product to the detection unit,
wherein the transport unit is further configured to keep a predetermined clearance before and after the nonconforming battery product on the conveyor in terms of a conveying direction of the conveyor toward the detection unit.

9. The system of one of the preceding claims,
wherein the reject mark is implemented as or in a machine-readable visible indication, particularly a barcode or a two-dimensional matrix code, that includes encoded data and/or directs to data stored in a database.

10. The system of one of the preceding claims, further comprising:
a control unit configured to retrieve the reject mark and provide the same to the detection unit.

11. An automated plant, particularly a smart factory, comprising the automated battery manufacturing system of one of the preceding claims.

12. A machine-readable medium storing instructions that, when executed by a processor, cause it to perform a battery manufacturing method, the battery manufacturing method comprising:
transporting a battery product to a detection unit;
by the detection unit, searching for a reject mark on the battery product;
if the reject mark is found on the battery product, recognizing that the battery product is a nonconforming battery product, and forwarding the nonconforming battery product to a removal unit; and
if no reject mark is found on the battery product, recognizing that the battery product is an approved battery product, and forwarding the approved battery product to a packaging unit.

13. The machine-readable medium of claim 12, wherein the battery manufacturing method further comprises:
receiving the reject mark via a user interface and/or via a communication network.

14. The machine-readable medium of claim 12 or 13,
wherein the battery product carries a machine-readable visible indication, particularly a barcode or a two-dimensional matrix code, that includes encoded data and/or directs to data stored in a database.

15. The machine-readable medium of any of claims 12 to 14, wherein the battery manufacturing method further comprises:
receiving an input package comprising a pallet supporting one or more fixed-form frames of a uniform size, wherein a plurality of battery products are accommodated in the one fixed-form frame or in each of the fixed-form frames;
unpacking the battery products of the plurality of battery products from the input package one fixed-form frame at a time; and
executing the battery manufacturing method of claim 12 for each of the battery products.

## Amended claims

### Amended claims in accordance with Rule 137(2) EPC.

1. An automated battery manufacturing system (100), comprising:
a detection unit (102) configured to detect a reject mark on a battery product (P);
a removal unit (104) configured to remove the battery product (P),
a transport unit (106) configured to transport the battery product (P) to the detection unit (102) and to transport the battery product (P) to the removal unit (104) in response to the detection unit (102) detecting the reject mark on the battery product (P).

2. The system (100) of claim 1,
wherein the battery product (P) is one of a plurality of battery products (P),
wherein the transport unit (106) is configured to transport the plurality of battery products (P) to the detection unit (102),
wherein the detection unit (102) is configured to detect the reject mark on each of the plurality of battery products (P).

3. The system (100) of claim 2,
wherein each battery product (P) of the plurality of battery products (P) carries a respective identifier of a set of identifiers,
wherein:
- one identifier of the set of identifiers is or comprises the reject mark; or
- multiple identifiers of the set of identifiers each are or comprise a respective reject mark.

4. The system (100) of claim 2 or 3, further comprising:
an unpacking unit (108) configured to receive an input package (202) including the plurality of battery products (P) and to unpack battery products (P) of the plurality of battery products (P) from the input package (202),
wherein the transport unit (106) is configured to sequentially transport the plurality of battery products (P), individually and/or in groups, from the unpacking unit (108) to the detection unit (102).

5. The system (100) of claim 4,
wherein the input package (202) comprises a pallet supporting one or more fixed-form frames of a uniform size, with the plurality of battery products (P) accommodated in the one fixed-form frame or in each of the fixed-form frames,
wherein the unpacking unit (108) is configured to unpack the battery products (P) of the plurality of battery products (P) from the input package (202) one fixed-form frame at a time.

6. The system (100) of one of the preceding claims, further comprising:
a packaging unit (112),
wherein the transport unit (106) is further configured to selectively transport the battery product (P) from the detection unit (102) to the packaging unit (112) in response to the detection unit (102) not detecting the reject mark on the battery product (P),
wherein the packaging unit (112) is configured to package the battery product (P) in an output package (204).

7. The system (100) of claim 6, further comprising
a package transfer line (216) configured to provide a container to the packaging unit (112),
wherein the output package (204) incorporates the container,
wherein the packaging unit (112) is configured to arrange the battery product (P) in the container according to an arrangement plan.

8. The system (100) of one of the preceding claims,
wherein the transport unit (106) comprises a conveyor (106A, 106B) configured to move the battery product (P) to the detection unit (102),
wherein the transport unit (106) is further configured to keep a predetermined clearance before and after the nonconforming battery product (PN) on the conveyor (106A, 106B) in terms of a conveying direction (A, D, R) of the conveyor (106A, 106B) toward the detection unit (102).

9. The system (100) of one of the preceding claims,
wherein the reject mark is implemented as or in a machine-readable visible indication, particularly a barcode or a two-dimensional matrix code, that includes encoded data and/or directs to data stored in a database.

10. The system (100) of one of the preceding claims, further comprising:
a control unit configured to retrieve the reject mark and provide the same to the detection unit (102).

11. An automated plant, particularly a smart factory, comprising the automated battery manufacturing system (100) of one of the preceding claims.

12. A machine-readable medium storing instructions that, when executed by a processor, cause it to perform a battery manufacturing method, the battery manufacturing method comprising:
transporting a battery product (P) to a detection unit (102);
by the detection unit (102), searching for a reject mark on the battery product (P);
if the reject mark is found on the battery product (P), recognizing that the battery product (P) is a nonconforming battery product (PN), and forwarding the nonconforming battery product (PN) to a removal unit (104); and
if no reject mark is found on the battery product (P), recognizing that the battery product (P) is an approved battery product (PA), and forwarding the approved battery product (PA) to a packaging unit (112).

13. The machine-readable medium of claim 12, wherein the battery manufacturing method further comprises:
receiving the reject mark via a user interface and/or via a communication network.

14. The machine-readable medium of claim 12 or 13,
wherein the battery product (P) carries a machine-readable visible indication, particularly a barcode or a two-dimensional matrix code, that includes encoded data and/or directs to data stored in a database.

15. The machine-readable medium of any of claims 12 to 14, wherein the battery manufacturing method further comprises:
receiving an input package (202) comprising a pallet supporting one or more fixed-form frames (206) of a uniform size, wherein a plurality of battery products (P) are accommodated in the one fixed-form frame (206) or in each of the fixed-form frames (206);
unpacking the battery products (P) of the plurality of battery products (P) from the input package (202) one fixed-form frame (206) at a time; and
executing the battery manufacturing method of claim 12 for each of the battery products (P).
